# EUROPEAN PATENT APPLICATION

(11) **EP 4 778 381 A1**
(43) Date of publication of application: **22.07.2026**
(21) Application number: 24864649.9
(22) Date of filing: 11.09.2024
(51) Int. Cl.: A01D 69/02

(54) **MOWING ROBOT**

(30) Priority: 11.09.2023 CN 202322476802 U; 11.09.2023 CN 202421385657 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); FANG, Wei, Shenzhen, Guangdong 518000 (CN); PEI, Lei, Shenzhen, Guangdong 518000 (CN)
(74) Representative: Huang, Liwei
(86) International application number: PCT/CN2024/118206
(87) International publication number: WO 2025/055933

(57) **Abstract**

The present disclosure has disclosed a mowing robot comprises a main body support, omnidirectional wheels, driving wheels, a plurality of drive motors, and a driving control system, a main body support comprises a first end and a second end; the first end and the second end being arranged opposite to each other; the omnidirectional wheels is disposed at the first end; the driving wheels are arranged at the second end; the plurality of drive motors are respectively arranged corresponding to the omnidirectional wheels and the drive wheels; each of the drive motors is connected to a corresponding omni-directional wheel and drives the corresponding omnidirectional wheel to rotate, or is connected to a corresponding drive wheels and drives the corresponding drive wheel to rotate; and the driving control system is configured to be connected to the plurality of drive motors, and to control respective rotational speeds of the omnidirectional wheel and the drive wheel by controlling magnitudes of respective input currents of the plurality of drive motors. Therefore, this disclosure uses a drive motor with the same rated power to overcome the situation of slipping caused by the greater resistance in deeper grass, while ensuring the walking speed of the lawnmower robot.

## Description

The present application claims priority to Chinese Patent Application No. 202322476802.7, filed on September 11, 2023, and entitled "Mowing Robot", which claims priority to Chinese Patent Application No. 202421385657.X, entitled "Mowing Robot", the entire contents of each of which are hereby incorporated by reference in their entirety.

### TECHNICAL FIELD

The present disclosure relates to the field of robotics, and in particular to a mowing robot.

### BACKGROUND ART

In existing robotic lawn mowers, rear wheels acts as driving wheels, front wheels acts driven wheels, Such lawn-mowing robots can travel on hardened road surfaces without significant issues. However, when operating on grassy terrain, problems tend to arise. Specifically, grass-covered surfaces exhibit a higher coefficient of friction than hardened road surfaces, and in areas where the grass grows densely, the coefficient of friction is even greater. During turning maneuvers, an inner-side front wheel experiences increased rotational resistance. As a result, wheel slippage is likely to occur. When wheel slippage occurs, the rear driving wheels are required to provide a greater driving torque in order to overcome the increased frictional resistance, which in turn leads to excessive wear of the rear wheels and damage to the grass.

### SUMMARY

In view of the above, the present disclosure provides a mowing robot to solve the technical problem of lawn wear during steering of the robotic lawn mower.

The present disclosure provides A mowing robot, the mowing robot comprises a main body support, omnidirectional wheels, driving wheels, a plurality of drive motors, and a driving control system, a main body support comprises a first end and a second end; the first end and the second end being arranged opposite to each other; the omnidirectional wheels is disposed at the first end; the driving wheels are arranged at the second end; the plurality of drive motors are respectively arranged corresponding to the omnidirectional wheels and the drive wheels; each of the drive motors is connected to a corresponding omnidirectional wheel and drives the corresponding omnidirectional wheel to rotate, or is connected to a corresponding drive wheel and drives the corresponding drive wheel to rotate; and the driving control system is configured to be connected to the plurality of drive motors, and to control respective rotational speeds of the omnidirectional wheel and the drive wheel by controlling magnitudes of respective input currents of the plurality of drive motors.

Accordingly, in the present disclosure, the mowing robot employs drive motors having identical rated power, and the drive control system can control the rotational speeds of the omnidirectional wheels and the drive wheels, respectively, by controlling magnitudes of input currents of the respective drive motors, so as to force one or more of the omnidirectional wheels and the drive wheels to convert sliding friction with the ground into rolling friction to avoid slipping, or, when both the omnidirectional wheels and the drive wheels do not slip relative to the ground, to adjust their respective rotational speeds to thereby adjust a traveling speed of the mowing robot. As a result, resistance between the omnidirectional wheels and the drive wheels and the ground can be overcome while ensuring the traveling speed of the mowing robot. Even in areas where grass depth causes relatively large resistance, the mowing robot can travel normally without slipping, thereby enhancing mowing capability of the mowing robot and avoiding damage to the lawn.

### BRIEF DESCRIPTION OF THE DRAWINGS

In order to more clearly describe the technical solutions in the embodiments of the present disclosure or the prior art, the drawings necessary for describing the embodiments or the prior art will be briefly described below. Apparently, the drawings in the description below merely show some of the embodiments of the present disclosure, and those of ordinary skill in the art would have obtained other drawings from these drawings without involving any inventive effort.
FIG. 1 is a top view of a mowing robot according to a first embodiment of the present disclosure.
FIG. 2 is an exploded schematic view of the mowing robot according to the first embodiment of the present disclosure.
FIG. 3 is a module schematic diagram of the mowing robot according to the first embodiment of the present disclosure.
FIG. 4 is a three-dimensional structural schematic diagram illustrating a connection of a front axle, a front drive motor, and an omnidirectional wheel according to the first embodiment of the present disclosure.
FIG. 5 is a side view of the omnidirectional wheel according to the first embodiment of the present disclosure.
FIG. 6 is a three-dimensional structural schematic diagram illustrating a connection of a rear axle, a rear drive motor, and a drive wheel according to the first embodiment of the present disclosure.
FIG. 7 is a speed schematic diagram of the mowing robot during on-site turning according to the first embodiment of the present disclosure.
FIG. 8 is a top view of a mowing robot according to a second embodiment of the present disclosure, in which a central axis of a drive wheel is perpendicular to a symmetry axis of the mowing robot.
FIG. 9 is a top view of a mowing robot according to the second embodiment of the present disclosure, in which a central axis of a drive wheel intersects but is not perpendicular to a symmetry axis of the mowing robot.

### DETAILED DESCRIPTION OF EMBODIMENTS

The technical solutions in the embodiments of the present disclosure will be clearly and completely described below with reference to the accompanying drawings in the embodiments of the present disclosure. Apparently, the described embodiments are merely some embodiments of the present disclosure, rather than all embodiments thereof.

Unless otherwise defined, all technical and scientific terms used herein have the same meanings as commonly understood by those skilled in the art to which the present disclosure pertains. The terminology used herein in the description of the present disclosure is for the purpose of describing particular embodiments only and is not intended to limit the present disclosure.

The terms "first", "second", and the like used in the description, the claims, and the accompanying drawings of the present disclosure are used to distinguish different objects rather than to describe a particular order. The use of terms such as "a", "an", or "the" does not denote a limitation of quantity, but rather denotes the presence of at least one. Terms such as "comprise" or "include" indicate that the elements or components preceding such terms encompass the elements or components listed thereafter and equivalents thereof, without excluding other elements or components. Terms such as "connected" or "coupled" are not limited to physical or mechanical connections, but may also include electrical connections, whether direct or indirect.

In the description of the present specification, references to the terms "embodiment", "specific embodiment", "example", and the like mean that specific features, structures, materials, or characteristics described in connection with such embodiments or examples are included in at least one embodiment or example of the present disclosure. The illustrative expressions of the above terms in this specification do not necessarily refer to the same embodiment or example. Moreover, the described specific features, structures, materials, or characteristics may be combined in any suitable manner in one or more embodiments or examples.

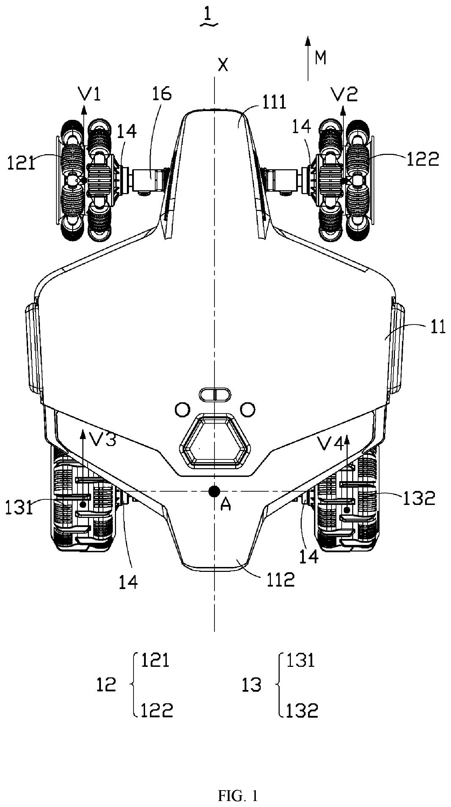

Referring to FIG. 1, FIG. 1 is a top view of a mowing robot according to a first embodiment of the present disclosure. The mowing robot 1 is a robot capable of automatically mowing grass. Its working principle is to identify contours of a lawn and obstacles by means of built-in sensors, and to mow grass along a preset path.

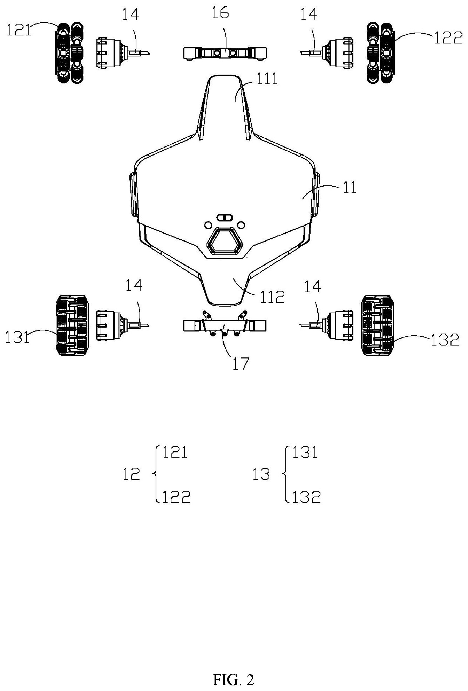

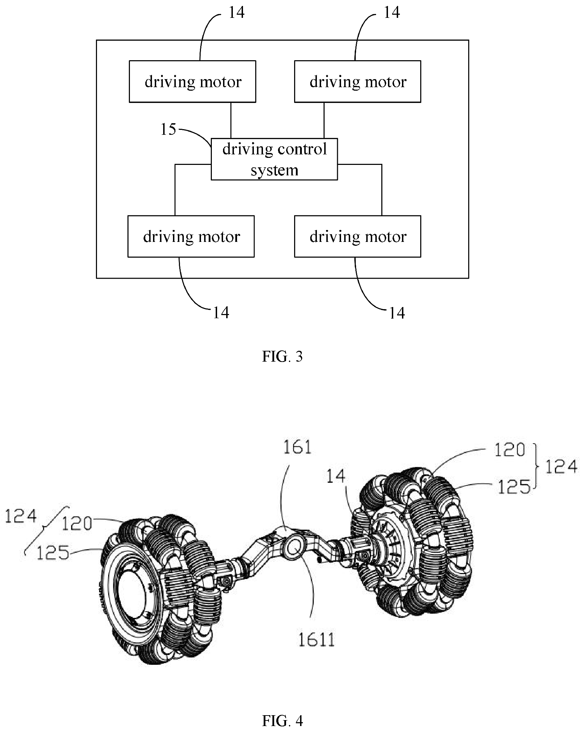

Referring to FIGS. 2 and 3 together, FIG. 2 is an exploded schematic view of the mowing robot 1 according to the first embodiment of the present disclosure, and FIG. 3 is a module schematic diagram of the mowing robot 1 according to the first embodiment of the present disclosure.

The mowing robot 1 comprises a main body support 11, omnidirectional wheels 12, driving wheels 13, a plurality of drive motors 14, and a driving control system 15. The main body support 11 comprises a first end 111 and a second end 112, the first end 111 and the second end 112 being arranged opposite to each other. The omnidirectional wheels 12 are disposed at the first end 111, and the driving wheels 13 are arranged at the second end 112. The plurality of drive motors 14 have identical rated power. The plurality of drive motors 14 are respectively arranged corresponding to the omnidirectional wheels 12 and the driving wheels 13. Each of the drive motors 14 is connected to a corresponding omnidirectional wheel 12 and drives the corresponding omnidirectional wheel 12 to rotate, or is connected to a corresponding driving wheel 13 and drives the corresponding driving wheel 13 to rotate. The driving control system 15 is configured to be connected to the plurality of drive motors 14, and to control respective rotational speeds of the omnidirectional wheels 12 and the driving wheels 13 by controlling magnitudes of respective input currents of the plurality of drive motors 14.

Accordingly, in the present disclosure, the mowing robot 1 employs a plurality of drive motors 14 having identical rated power, and the driving control system 15 controls the respective rotational speeds of the omnidirectional wheels 12 and the driving wheels 13 by controlling magnitudes of respective input currents of the plurality of drive motors 14, thereby forcing one or more of the omnidirectional wheels 12 and the driving wheels 13 to convert sliding friction with the ground into rolling friction so as to avoid slipping, or, when the omnidirectional wheels 12 and the driving wheels 13 do not slip relative to the ground, adjusting their respective rotational speeds so as to adjust a traveling speed of the mowing robot 1. As a result, resistance between the omnidirectional wheels 12 and the driving wheels 13 and the ground can be overcome while ensuring the traveling speed of the mowing robot 1. Even in areas where grass depth causes relatively large resistance, the mowing robot 1 can travel normally without slipping, thereby enhancing mowing capability of the mowing robot 1 and avoiding damage to the lawn.

Wherein, referring to FIG. 4, the omnidirectional wheel 12 has at least two degrees of freedom. Compared with a conventional rubber wheel having only one degree of freedom, the additional degree of freedom of the omnidirectional wheel 12 is located at a tire tread, such that rotation can be generated through contact with the ground, and a rotation plane thereof forms a certain included angle with a rotation plane of the conventional rubber tire having only one degree of freedom. The omnidirectional wheel 12 may be, but is not limited to, a continuous switching wheel or a Mecanum wheel.

In this embodiment, the omnidirectional wheel 12 is a continuous switching wheel. The omnidirectional wheel 12 comprises a hub 120 and a plurality of auxiliary wheels 125, and the plurality of auxiliary wheels 125 are spacedly mounted through the hub 120. When the omnidirectional wheel 12 moves forward, the hub 120 rotates about a central axis of the omnidirectional wheel 12, and the hub 120 drives the auxiliary wheels 125 to rotate integrally about the central axis of the omnidirectional wheel 12. When the omnidirectional wheel 12 turns, not only can the hub 120 rotate about the central axis of the omnidirectional wheel 12 and drive the auxiliary wheels 125 to rotate integrally about the central axis of the omnidirectional wheel 12, but the auxiliary wheels 125 can also rotate relative to the hub 120 with the hub 120 serving as a rotation axis. Accordingly, compared with the driving wheel 13, the omnidirectional wheel 12 has an additional degree of freedom of rolling around the hub 120.

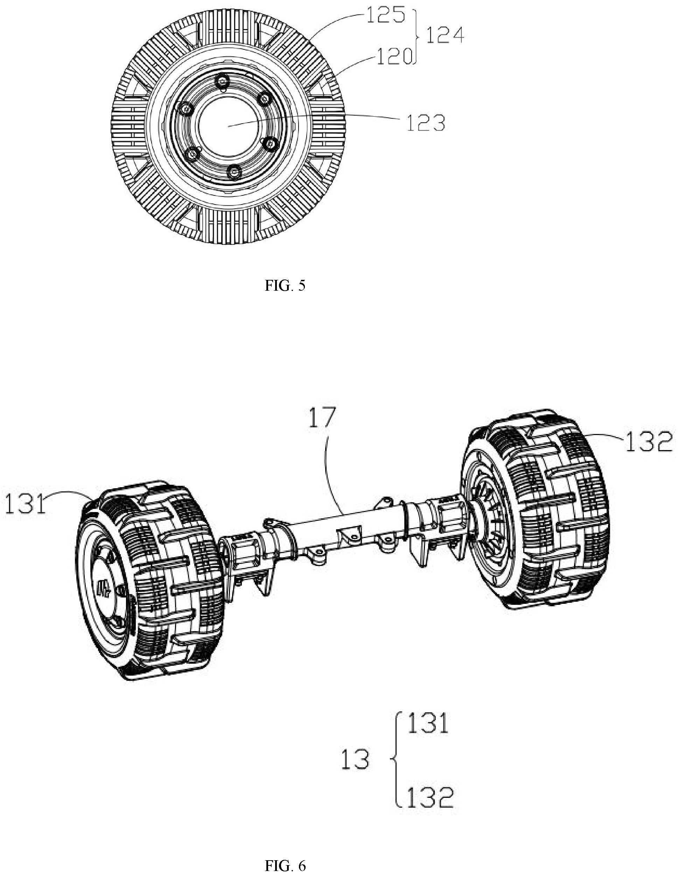

In some embodiments, the omnidirectional wheel 12 is a single-row wheel, a double-row wheel coaxially arranged, or a multi-row wheel coaxially arranged. In the present embodiment, the omnidirectional wheel 12 is a double-row wheel. Referring to FIGS. 4 and 5 together, the double-row wheel comprises a wheel shaft 123 and two wheels 124, and the two wheels 124 are connected to the wheel shaft 123. Each wheel 124 comprises a hub 120 and a plurality of auxiliary wheels 125, and the auxiliary wheels 125 of each wheel 124 are spacedly mounted through the hub 120 of the wheel 124. Moreover, projections of the two wheels 124 on a plane perpendicular to an axis of the wheel shaft 123 overlap with each other. When the double-row wheel rotates to a position where auxiliary wheels 125 of the two wheels 124 simultaneously contact the ground, compared with a case where only a single auxiliary wheel 125 contacts the ground, unit pressure applied by the auxiliary wheels 125 to the ground can be reduced, thereby reducing damage to the lawn. In addition, rotation of the auxiliary wheels 125 facilitates expelling debris from gaps between the auxiliary wheels 125 and the wheel shaft 123, thereby improving operational flexibility.

Further referring to FIG. 5, the auxiliary wheels 125 on different wheels 124 are staggeredly arranged to form a complete circular shape, which can improve motion smoothness and prevent unevenness during rotation. In other embodiments, the omnidirectional wheel 12 may be a multi-row wheel. The multi-row wheel comprises a wheel shaft and a plurality of wheels, the plurality of wheels being connected to the wheel shaft. Each wheel comprises a hub and a plurality of auxiliary wheels, and the auxiliary wheels of each wheel are spacedly mounted through the hub of the wheel. The auxiliary wheels on different wheels are staggeredly arranged to form a complete circular shape, which can improve motion smoothness and prevent unevenness during rotation. In another embodiments, the auxiliary wheels 125 on different wheels 124 may be at least partially non-staggered, such that a pattern formed by the auxiliary wheels 125 on different wheels 124 has a polygonal projection on a plane perpendicular to the axis of the wheel shaft 123.

Wherein, referring to FIG. 6, the driving wheel 13 is a conventional rubber tire having only one degree of freedom, that is, rotating about a central axis of the driving wheel 13. Similarly, each driving wheel 13 may comprise a single rubber tire or two or more rubber tires coaxially arranged, which is not limited herein.

In some embodiments, referring to FIG. 2 again, the plurality of drive motors 14 are of an identical motor model. That is, all parameters of the plurality of drive motors 14 are identical.

Accordingly, selection and stocking of the drive motors 14 can be facilitated, and installation of the drive motors 14 on the mowing robot 1 can also be facilitated.

In some embodiments, the drive motor 14 may be, but is not limited to, a hub motor, or a drive motor formed by a conventional motor combined with a gear transmission.

In some embodiments, the plurality of drive motors 14 have identical rated torque, wherein the rated torque refers to torque output by the drive motor 14 at rated power. A drive motor 14 having a rated torque less than a preset threshold is defined as a small-torque motor. In some embodiments, the preset threshold is 0.3 N·m. In other embodiments, the preset threshold may be appropriately adjusted as required. Generally, output torque of the drive motor 14 may further be amplified after gear reduction. For example, in an exemplary embodiment, the drive motor 14 has a torque of 0.24 Nom at rated output power, and the torque output by the drive motor 14 at rated output power can reach 2.4 N·m after gear reduction. In the present embodiment, four drive motors 14 are provided, and all of the drive motors 14 are selected as hub motors having relatively small rated torque. For example, when hub motors having a rated torque of 0.24 N·m are selected, experimental results show that, under different mowing environments and under conditions where grass growth and lodging vary, turning or on-site steering can be achieved with sufficient power, while avoiding slipping and grass abrasion. Moreover, by selecting small-torque motors, motor cost of the mowing robot 1 can be significantly reduced, overall weight of the mowing robot 1 can be reduced to thereby reduce energy consumption, and damage to the lawn caused by excessive weight of the mowing robot 1 can be mitigated. It should be understood that, in other embodiments, the drive motor 14 may be selected to have a rated torque greater than or equal to 0.3 N·m, which is not limited herein.

In some embodiments, referring to FIG. 2 again, the main body support 11 has a bulged configuration with a wider middle portion and narrower front and rear ends. A direction parallel to a symmetry axis X of the mowing robot 1 is defined as direction M, wherein a direction indicated by an arrow of direction M is defined as a front direction, and a direction opposite to the direction indicated by the arrow of direction M is defined as a rear direction. The first end 111 may be located at a front end or a rear end of the main body support 11. In the present embodiment, the first end 111 is located at the front end of the main body support 11. The mowing robot 1 further comprises a front axle 16, and the front axle 16 is fixed to the first end 111. An extending direction of the front axle 16 is substantially perpendicular to direction M. Two omnidirectional wheels 12 are provided and are respectively disposed at opposite ends of the front axle 16 and located at opposite sides of the first end 111, and the two omnidirectional wheels 12 are respectively driven by two drive motors 14.

In some embodiments, referring to FIG. 4, the front axle 16 has an arched portion 161, and a shaft hole 1611 is formed in the arched portion 161, a central axis of the shaft hole 1611 being parallel to direction M. A shaft (not shown) corresponding to the shaft hole 1611 is provided at the first end 111 of the main body support 11, and the shaft is parallel to direction M. The front axle 16 is connected to the first end 111 of the main body support 11 through engagement between the shaft hole 1611 and the shaft. When the shaft hole 1611 rotates relative to the shaft, the front axle 16 can rotate relative to the main body support 11 about the shaft, such that the mowing robot 1 has a certain capability to adapt to uneven ground surfaces.

In some embodiments, referring to FIGS. 2 and 6, the second end 112 may be located at a front end or a rear end of the main body support 11. In the present embodiment, the second end 112 is located at the rear end of the main body support 11. The mowing robot 1 further comprises a rear axle 17, and the rear axle 17 is fixed to the second end 112. Two driving wheels 13 are provided and are respectively disposed at opposite ends of the rear axle 17 and located at opposite sides of the second end 112. The two driving wheels 13 are respectively driven by two drive motors 14.

In addition, compared with a conventional mowing robot in which all four wheels are driving wheels, the mowing robot 1 of the present disclosure employs omnidirectional wheels 12 as front wheels and driving wheels 13 as rear wheels. Since the omnidirectional wheels 12 have a smaller weight than the driving wheels 13, overall weight of the mowing robot 1 can be reduced, and due to a greater degree of freedom of the omnidirectional wheels 12, wear on the lawn can be reduced.

In other embodiments, the two omnidirectional wheels 12 are symmetrically arranged with respect to the symmetry axis X of the main body support 11 and opposite inclination angles relative to a symmetry axis X of the main body support 11.

When the drive motors 14 provide the same driving force to the omnidirectional wheels 12, compared with a configuration in which the omnidirectional wheels 12 are symmetrically arranged and parallel to the symmetry axis X of the main body support 11, the omnidirectional wheels are symmetrically arranged with opposite inclination angles relative to a symmetry axis X of the main body support, enables the mowing robot 1 to more easily achieve steering.

In some embodiments, the driving control system 15 adjusts magnitudes of input currents of the plurality of drive motors 14 based on different operating scenarios so as to adjust respective rotational speeds of the omnidirectional wheels 12 and the driving wheels 13, wherein the different operating scenarios comprise one selected from straight traveling, turning, on-site steering, and climbing.

In some embodiments, referring to FIG. 1, the omnidirectional wheels 12 comprise a left omnidirectional wheel 121 and a right omnidirectional wheel 122. The driving wheels 13 comprise a left driving wheel 131 and a right driving wheel 132. Four drive motors 14 are provided. The rotational speed of the left omnidirectional wheel 121 V1 and the rotational speed of the left driving wheel 131 V3 generated by two corresponding drive motors 14 are equal. The rotational speed of the right omnidirectional wheel 122 V2 and the rotational speed of the right driving wheel 132 V4 generated by the other two corresponding drive motors 14 are equal.

Herein, the rotational speed of the left omnidirectional wheel 121 V1 refers to a rotational speed of the left omnidirectional wheel 121 relative to its wheel shaft 123. The rotational speed of the right omnidirectional wheel 122 V2 refers to a rotational speed of the right omnidirectional wheel 122 relative to its wheel shaft 123. The rotational speed of the left driving wheel 131 V3 refers to a rotational speed of the left driving wheel 131 relative to its central axis. The rotational speed of the right driving wheel 132 V4 refers to a rotational speed of the right driving wheel 132 relative to its central axis. It should be understood that, in other embodiments, in order to adapt to different complex terrain environments, the rotational speed of the left omnidirectional wheel 121 V1 and the rotational speed of the left driving wheel 131 V3 generated by the corresponding two drive motors 14 may be unequal, and the rotational speed of the right omnidirectional wheel 122 V2 and the rotational speed of the right driving wheel 132 V4 generated by the corresponding two drive motors 14 may be unequal.

Referring to FIG. 1, when the mowing robot 1 travels straight normally, the left driving wheel 131, the right driving wheel 132, the left omnidirectional wheel 121, and the right omnidirectional wheel 122 rotate in the same direction, and the rotational speed of the left omnidirectional wheel 121 V1, the rotational speed of the right omnidirectional wheel 122 V2, the rotational speed of the left driving wheel 131 V3, and the rotational speed of the right driving wheel 132 V4 are equal.

When the mowing robot 1 performs a large-radius turn, an instantaneous center of velocity of the mowing robot 1 is located outside a body of the mowing robot 1. In this case, the left driving wheel 131, the right driving wheel 132, the left omnidirectional wheel 121, and the right omnidirectional wheel 122 rotate in the same direction, but rotational speeds of two wheels located on an inner side of the turn are smaller than rotational speeds of the other two wheels located on an outer side of the turn. Specifically, when the mowing robot 1 turns right, the rotational speed of the right driving wheel 132 V4 and the rotational speed of the right omnidirectional wheel 122 V2 located on the inner side of the turn are smaller than the rotational speed of the left driving wheel 131 V3 and the rotational speed of the left omnidirectional wheel 121 V1 located on the outer side of the turn. Conversely, when the mowing robot 1 turns left, the rotational speed of the left driving wheel 131 V3 and the rotational speed of the left omnidirectional wheel 121 V1 located on the inner side of the turn are smaller than the rotational speed of the right driving wheel 132 V4 and the rotational speed of the right omnidirectional wheel 122 V2 located on the outer side of the turn.

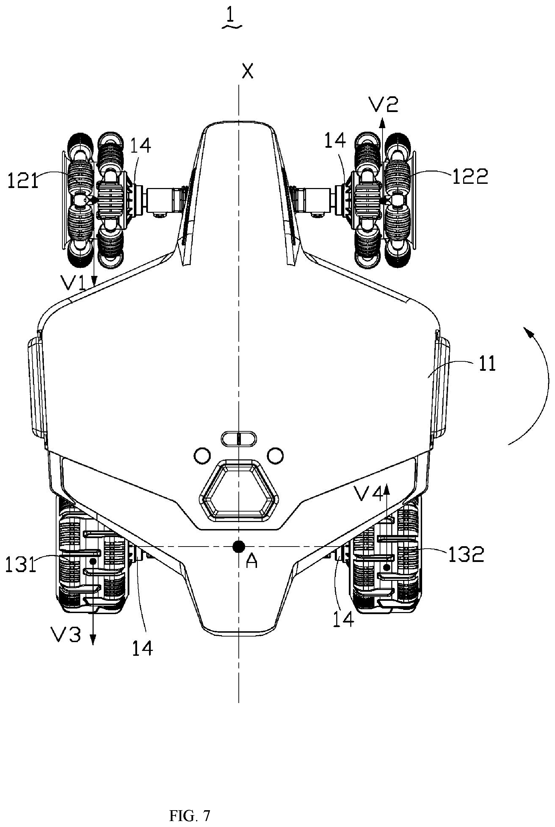

In some embodiments, referring to FIG. 7, when the mowing robot 1 performs on-site steering, the rotational speed of the left omnidirectional wheel 121 V1, the rotational speed of the right omnidirectional wheel 122 V2, the rotational speed of the left driving wheel 131 V3, and the rotational speed of the right driving wheel 132 V4 are equal. The left omnidirectional wheel 121 and the left driving wheel 131 rotate in the same direction, the right omnidirectional wheel 122 and the right driving wheel 132 rotate in the same direction, and a rotational direction of the left driving wheel 131 is opposite to a rotational direction of the right driving wheel 132. An instantaneous center of velocity A of the mowing robot 1 is located at a midpoint of a line connecting the left driving wheel 131 and the right driving wheel 132.

This is because, during turning or on-site steering of the mowing robot 1, a velocity of the left omnidirectional wheel 121 is a resultant velocity of a first velocity generated by rotation of the left omnidirectional wheel 121 driven by the drive motor 14 and a second velocity generated by rolling of the auxiliary wheels 125 of the left omnidirectional wheel 121. Accordingly, when the left omnidirectional wheel 121 and the left driving wheel 131 do not slip and the corresponding drive motors 14 drive them to generate equal rotational speeds of the left omnidirectional wheel 121 V1 and the left driving wheel 131 V3, an actual rotational speed of the left omnidirectional wheel 121 is greater than an actual rotational speed of the left driving wheel 131. A magnitude relationship between the rotational speed of the right omnidirectional wheel 122 V2 and the rotational speed of the right driving wheel 132 V4 is the same, and thus will not be repeated herein.

When the driving control system 15 performs speed allocation for the left driving wheel 131, the right driving wheel 132, the left omnidirectional wheel 121, and the right omnidirectional wheel 122, the rotational speed of the left omnidirectional wheel 121 V1 and the rotational speed of the left driving wheel 131 V3 generated by two corresponding drive motors 14 are equal, and the rotational speed of the right omnidirectional wheel 122 V2 and the rotational speed of the right driving wheel 132 V4 generated by the other two corresponding drive motors 14 are equal. Rotational directions of the left omnidirectional wheel 121, the left driving wheel 131, the right omnidirectional wheel 122, and the right driving wheel 132 are determined based on an actual turning radius of the mowing robot 1. After respective speed allocations of the left driving wheel 131, the right driving wheel 132, the left omnidirectional wheel 121, and the right omnidirectional wheel 122 are determined, the left omnidirectional wheel 121 and the right omnidirectional wheel 122 further increase their speeds due to rolling of their respective auxiliary wheels 125, such that, during on-site steering, the instantaneous center of velocity A of the mowing robot 1 is finally located at a midpoint of a line connecting the left driving wheel 131 and the right driving wheel 132.

In some embodiments, when the mowing robot 1 performs on-site steering, the rotational speed of the left omnidirectional wheel 121 V1 and the rotational speed of the left driving wheel 131 V3 generated by two corresponding drive motors 14 are equal, and the rotational speed of the right omnidirectional wheel 122 V2 and the rotational speed of the right driving wheel 132 V4 generated by the other two corresponding drive motors 14 are equal. The rotational speed of the left driving wheel 131 V3 and the rotational speed of the right driving wheel 132 V4 are unequal. The left omnidirectional wheel 121 and the left driving wheel 131 rotate in the same direction, the right omnidirectional wheel 122 and the right driving wheel 132 rotate in the same direction, and the rotational direction of the left driving wheel 131 is opposite to the rotational direction of the right driving wheel 132, such that the instantaneous center of velocity A of the mowing robot 1 floats leftward or rightward along the line connecting the left driving wheel 131 and the right driving wheel 132.

Specifically, when the rotational speed of the left driving wheel 131 V3 is smaller than the rotational speed of the right driving wheel 132 V4, the instantaneous center of velocity A of the mowing robot 1 floats toward a side closer to the left driving wheel 131 along the line connecting the left driving wheel 131 and the right driving wheel 132. When the rotational speed of the right driving wheel 132 V4 is smaller than the rotational speed of the left driving wheel 131 V3, the instantaneous center of velocity A of the mowing robot 1 floats toward a side closer to the right driving wheel 132 along the line connecting the left driving wheel 131 and the right driving wheel 132.

In addition, when the mowing robot 1 climbs a slope, the drive motors 14 are required to provide greater torque to overcome gravitational potential energy. When the mowing robot 1 travels on flat ground, it may also encounter scenarios in which traveling resistance is relatively large, resulting in a relatively low traveling speed. Therefore, even when the plurality of drive motors 14 output the same current, actual rotational speeds obtained by the left driving wheel 131, the right driving wheel 132, the left omnidirectional wheel 121, and the right omnidirectional wheel 122 may vary. Accordingly, in some embodiments, the driving control system 15 is further configured to: detect respective real-time rotational speeds of the left driving wheel 131, the right driving wheel 132, the left omnidirectional wheel 121, and the right omnidirectional wheel 122, and compare the respective real-time rotational speeds with corresponding current target rotational speeds of the left driving wheel 131, the right driving wheel 132, the left omnidirectional wheel 121, and the right omnidirectional wheel 122; determine, among the left driving wheel 131, the right driving wheel 132, the left omnidirectional wheel 121, and the right omnidirectional wheel 122, a wheel whose real-time rotational speed is lower than a corresponding target rotational speed as a target wheel, and determine a drive motor 14 driving the target wheel as a target drive motor; and increase input current supplied to the target drive motor, such that the real-time rotational speed of the target wheel driven by the target drive motor approaches the target rotational speed.

It should be understood that the target rotational speed refers to a rotational speed allocated to each of the left driving wheel 131, the right driving wheel 132, the left omnidirectional wheel 121, and the right omnidirectional wheel 122 after the mowing robot 1 determines a traveling speed thereof, in combination with a current operating scenario, such as straight traveling, turning, on-site steering, or climbing. The driving control system 15 determines respective input currents of the left driving wheel 131, the right driving wheel 132, the left omnidirectional wheel 121, and the right omnidirectional wheel 122 based on the respective target rotational speeds of the left driving wheel 131, the right driving wheel 132, the left omnidirectional wheel 121, and the right omnidirectional wheel 122.

The real-time rotational speed refers to an actual rotational speed of each of the left driving wheel 131, the right driving wheel 132, the left omnidirectional wheel 121, and the right omnidirectional wheel 122 when a corresponding drive motor 14 starts operating according to a determined input current. A magnitude of an increase in input current supplied by the driving control system 15 to the target drive motor can be determined based on a difference between the real-time rotational speed and the target rotational speed of the target wheel. When the difference between the real-time rotational speed and the target rotational speed of the target wheel is relatively large, the driving control system 15 controls a larger increase in the input current supplied to the target drive motor; when the difference between the real-time rotational speed and the target rotational speed of the target wheel is relatively small, the driving control system 15 controls a relatively smaller increase in the input current supplied to the target drive motor.

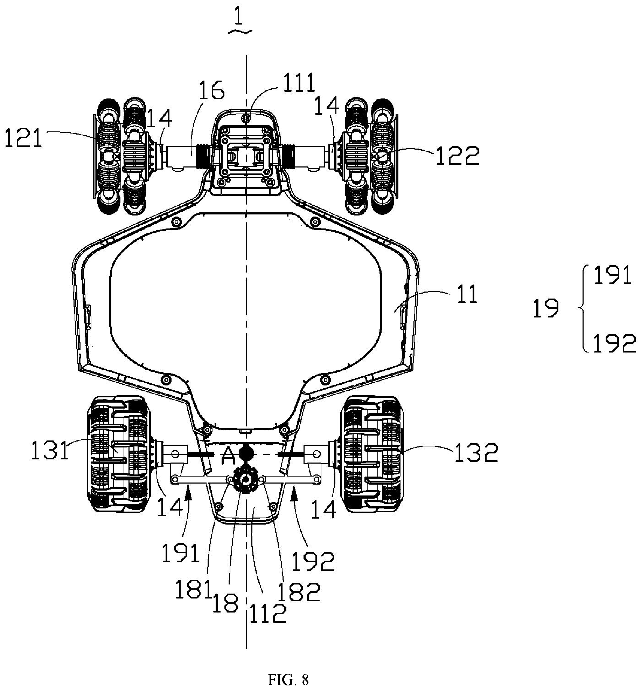

In some embodiments, referring to FIG. 8, FIG. 8 is a top view of a mowing robot according to a second embodiment of the present disclosure, in which a central axis of a driving wheel is perpendicular to a symmetry axis of the mowing robot. The mowing robot 1 in the second embodiment is structurally similar to the mowing robot 1 in the first embodiment, except that, in the second embodiment, the mowing robot 1 further comprises a steering motor 18, and the steering motor 18 is connected to the driving wheel 13. It should be understood that, when the mowing robot 1 comprises the steering motor 18, the steering motor 18 may be directly fixed to the second end 112 of the main body support 11. In this case, the rear axle 17 may be omitted. The steering motor 18 is capable of driving the driving wheel 13 to rotate so as to be inclined relative to the symmetry axis X of the mowing robot 1.

In the present embodiment, the number of the steering motor 18 is one. The mowing robot 1 further comprises a transmission mechanism 19. Two ends of the steering motor 18 are respectively connected to the left driving wheel 131 and the right driving wheel 132 through the transmission mechanism 19. Accordingly, rotation of an output shaft of the steering motor 18 can simultaneously drive the left driving wheel 131 and the right driving wheel 132 to rotate, such that the left driving wheel 131 and the right driving wheel 132 are inclined relative to the symmetry axis X of the mowing robot 1 or arranged parallel to the symmetry axis X of the mowing robot 1.

Specifically, in the present embodiment, the steering motor 18 comprises a first connection end 181 and a second connection end 182, the first connection end 181 and the second connection end 182 being respectively located on opposite sides of the steering motor 18. The transmission mechanism 19 comprises a first transmission mechanism 191 connected between the left driving wheel 131 and the first connection end 181 of the steering motor 18, and a second transmission mechanism 192 connected between the right driving wheel 132 and the second connection end 182 of the steering motor 18. Accordingly, the steering motor 18 drives the left driving wheel 131 to rotate relative to the symmetry axis X to a predetermined angle through the first transmission mechanism 191, and drives the right driving wheel 132 to rotate relative to the symmetry axis X to a predetermined angle through the second transmission mechanism 192.

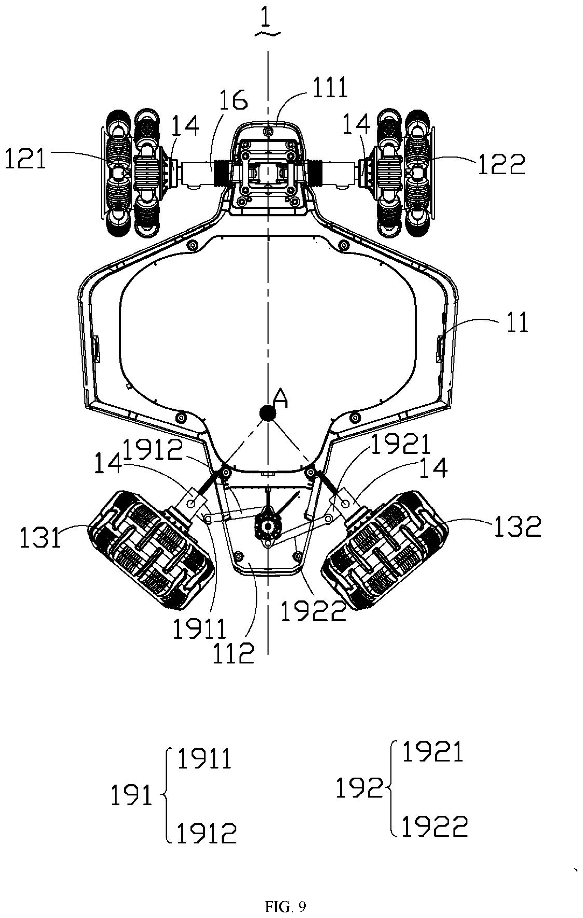

In some embodiments, referring to FIG. 9, the first transmission mechanism 191 comprises a first linkage rod 1911 and a second linkage rod 1912. The fist end of the first linkage rod 1911 is connected to the drive motor 14 configured to drive the left driving wheel 131, and a second end of the first linkage rod 1911 is connected to a first end of the second linkage rod 1912. A second end of the second linkage rod 1912 is connected to a first connection end 181 of the steering motor 18. The second transmission mechanism 192 comprises a third linkage rod 1921 and a fourth linkage rod 1922. A first end of the third linkage rod 1921 is connected to the drive motor 14 configured to drive the right driving wheel 132, and an second end of the third linkage rod 1921 is connected to a first end of the fourth linkage rod 1922. A second end of the fourth linkage rod 1922 is connected to the second connection end 182 of the steering motor 18.

Accordingly, motion transmission between the steering motor 18 and the left driving wheel 131 is implemented through the first transmission mechanism 191 comprising the first linkage rod 1911 and the second linkage rod 1912, and motion transmission between the steering motor 18 and the right driving wheel 132 is implemented through the second transmission mechanism 192 comprising the third linkage rod 1921 and the fourth linkage rod 1922.

In other embodiments, the number of the steering motor 18 may be two. That is, the steering motor 18 comprises a left steering motor and a right steering motor, the left steering motor being connected to the left driving wheel 131, and the right steering motor being connected to the right driving wheel 132. The left steering motor drives the left driving wheel 131 to rotate relative to the symmetry axis X, and the right steering motor drives the right driving wheel 132 to rotate relative to the symmetry axis X.

In some embodiments, referring to FIG. 9, a central axis of the left driving wheel 131 intersects with a central axis of the right driving wheel 132. The rotational speed of the left omnidirectional wheel 121 V1, the rotational speed of the right omnidirectional wheel 122 V2, the rotational speed of the left driving wheel 131 V3, and the rotational speed of the right driving wheel 132 V4 are equal. When the left omnidirectional wheel 121 and the left driving wheel 131 rotate in the same direction, the right omnidirectional wheel 122 and the right driving wheel 132 rotate in the same direction, and the rotational direction of the left driving wheel 131 is opposite to the rotational direction of the right driving wheel 132, an instantaneous center of velocity A of the mowing robot 1 during on-site rotation is located at an intersection position of the central axis of the left driving wheel 131 and the central axis of the right driving wheel 132.

Accordingly, when the left driving wheel 131 is inclined relative to the symmetry axis X and the right driving wheel 132 is inclined relative to the symmetry axis X, compared with a case in which the left driving wheel 131 is parallel to the symmetry axis X and the right driving wheel 132 is parallel to the symmetry axis X, the mowing robot 1 can more easily achieve steering.

It should be noted that those skilled in the art should also understand that the embodiments described in the present specification are optional embodiments, and the actions and modules involved are not necessarily required for the present disclosure. The driving control system may comprise a processor and a memory. The processor may be a general-purpose processor, a digital signal processor, an application-specific integrated circuit, a field-programmable gate array, or other programmable logic devices, discrete gate or transistor logic devices, or discrete hardware components. The memory may be a random access memory, a flash memory, a read-only memory, a programmable read-only memory, an electrically erasable programmable memory, a register, or other mature storage media in the art.

The above descriptions are merely preferred embodiments of the present disclosure. It should be pointed out that those of ordinary skill in the art may make various modifications and improvements without departing from the inventive concept of the present disclosure, and such modifications and improvements shall all fall within the protection scope of the present disclosure.

## Claims

1. A mowing robot, comprising:
a main body support, omnidirectional wheels, driving wheels,
a plurality of drive motors, and a driving control system,
the main body support includes a first end and a second end; the first end and the second end being arranged opposite to each other;
the omnidirectional wheels are disposed at the first end; the driving wheels are arranged at the second end;
the plurality of drive motors are respectively arranged corresponding to the omnidirectional wheels and the drive wheels;
wherein each of the drive motors is connected to a corresponding omnidirectional wheel and drives the corresponding omnidirectional wheel to rotate, or is connected to a corresponding drive wheel and drives the corresponding drive wheel to rotate; and
the driving control system is configured to be connected to the plurality of drive motors, and to control respective rotational speeds of the omnidirectional wheels and the drive wheels by controlling magnitudes of respective input currents of the plurality of drive motors.

2. The mowing robot according to claim 1, wherein
the plurality of drive motors have identical rated power ratings, and/or the plurality of drive motors are of an identical motor model.

3. The mowing robot according to claim 1, wherein
the driving control system is configured to adjust respective input current magnitudes of the plurality of drive motors based on different operating scenarios, so as to adjust respective rotational speeds of the omnidirectional wheels and the drive wheels,
wherein the different operating scenarios comprise at least one selected from straight-line traveling, turning, on-site rotation, and climbing.

4. The mowing robot according to claim 3, wherein
the driving control system is configured to detect respective real-time rotational speeds of the omnidirectional wheels and the drive wheels and compare the detected real-time rotational speeds with corresponding current target rotational speeds, respectively;
determine the omnidirectional wheel or drive wheel whose real-time rotational speed is lower than its corresponding target rotational speed as a target wheel, and determine a target drive motor configured to drive the target wheel; and
increase a first input current magnitude to the target drive motor, such that the target drive motor drives the target wheel to increase the real-time rotational speed toward the target rotational speed.

5. The mowing robot according to any one of claims 1 to 4, wherein
the mowing robot comprises a front axle, the front axle is disposed at the first end, the omnidirectional wheels comprise two omnidirectional wheels respectively disposed at opposite ends of the front axle.

6. The mowing robot according to claim 5, wherein
the front axle comprises an arched portion, the arched portion defining an axle hole,
wherein a central axis of the axle hole is parallel to a symmetry axis of the main body support; and
wherein the first end of the main body support comprises a shaft corresponding to the axle hole, and the front axle is coupled to the first end of the main body support through engagement between the axle hole and the shaft.

7. The mowing robot according to claim 5, wherein
the mowing robot further comprises a rear axle fixed to the second end of the main body support,
wherein the drive wheels comprises two drive wheels respectively disposed at opposite ends of the rear axle.

8. The mowing robot according to claim 5, wherein
the omnidirectional wheels are symmetrically arranged with opposite inclination angles relative to a symmetry axis of the main body support.

9. The mowing robot according to claim 7, wherein
the omnidirectional wheels comprise a left omnidirectional wheel and a right omnidirectional wheel, and the drive wheels comprise a left drive wheel and a right drive wheel;
wherein the left omnidirectional wheel and the left drive wheel are respectively driven by corresponding two of the drive motors to have equal rotational speeds; and
wherein the right omnidirectional wheel and the right drive wheel are respectively driven by corresponding two of the drive motors to have equal rotational speeds.

10. The mowing robot according to claim 9, wherein,
when the mowing robot rotates on-site,
a rotational speed of the left drive wheel and a rotational speed of the right drive wheel are equal;
a rotational direction of the left omnidirectional wheel is the same as a rotational direction of the left drive wheel;
a rotational direction of the right omnidirectional wheel is the same as a rotational direction of the right drive wheel;
a rotational direction of the left drive wheel is opposite to a rotational direction of the right drive wheel; and
an instantaneous center of velocity of the mowing robot is proximate to a midpoint of a line connecting the left drive wheel and the right drive wheel.

11. The mowing robot according to claim 9, wherein
when the mowing robot rotates on-site, the rotational speed of the left drive wheel and the rotational speed of the right drive wheel are unequal;
a rotational direction of the left omnidirectional wheel is the same as a rotational direction of the left drive wheel;
a rotational direction of the right omnidirectional wheel is the same as a rotational direction of the right drive wheel;
a rotational direction of the left drive wheel is opposite to a rotational direction of the right drive wheel; and
an instantaneous center of velocity of the mowing robot varies laterally along a line connecting the left drive wheel and the right drive wheel.

12. The mowing robot according to any one of claims 1-4, wherein
the mowing robot further comprises a steering motor coupled to the drive wheels,
wherein the steering motor is configured to drive the drive wheels to rotate at an inclined angle relative to the symmetrical axis of the main body support.

13. The mowing robot according to claim 12, wherein
the omnidirectional wheels comprise a left omnidirectional wheel and a right omnidirectional wheel, the drive wheels comprise a left drive wheel and a right drive wheel, and the steering motor comprises a left steering motor and a right steering motor;
wherein the left steering motor is coupled to the left drive wheel, and the right steering motor is coupled to the right drive wheel;
wherein a central axis of the left drive wheel intersects a central axis of the right drive wheel; and
when rotational speeds of the left omnidirectional wheel, the left drive wheel, the right omnidirectional wheel, and the right drive wheel are equal, a rotational direction of the left omnidirectional wheel is the same as a rotational direction of the left drive wheel, a rotational direction of the right omnidirectional wheel is the same as a rotational direction of the right drive wheel, and a rotational direction of the left drive wheel is opposite to a rotational direction of the right drive wheel, an instantaneous center of velocity of the mowing robot is proximate to an intersection of the central axis of the left drive wheel and the central axis of the right drive wheel.

14. The mowing robot according to any one of claims 1 to 4, wherein
the omnidirectional wheel comprises a single-row omnidirectional wheel, a coaxially arranged duplex omnidirectional wheel, or a coaxially arranged multi-row omnidirectional wheel.

15. The mowing robot according to claim 14, wherein
the duplex omnidirectional wheel comprises a first axle, a first wheel, a second wheel, and the first wheel and the second wheel are mounted on the first axle,
each of the first wheel and the second wheel comprises a hub and a plurality of auxiliary rollers, the plurality auxiliary rollers are strung on the hub at intervals, and the auxiliary wheels of the first wheel are staggered with the auxiliary wheel of the second wheel so as to collectively form a complete circular profile;
or
the multi-row wheel comprises a second axle and a plurality of wheels mounted on the second axle,
wherein each of the plurality of wheels comprises a hub and a plurality of auxiliary rollers, the auxiliary rollers of each wheel are strung on the hub at intervals,
and wherein the auxiliary rollers of different wheels are circumferentially staggered with respect to each other so as to collectively form a complete circular profile.

16. The mowing robot according to claim 13, wherein
the mowing robot further comprises a transmission mechanism,
wherein opposite ends of the steering motor are respectively coupled to the left drive wheel and the right drive wheel through the transmission mechanism; and
wherein rotation of an output shaft of the steering motor simultaneously drives the left drive wheel and the right drive wheel to rotate, such that the left drive wheel and the right drive wheel are selectively oriented in an inclined state or a parallel state relative to a symmetry axis of the mowing robot.

17. The mowing robot according to claim 16, wherein
the steering motor includes a first connection end and a second connection end, the first connection end and the second connection end being located on opposite sides of the steering motor;
wherein the transmission mechanism comprises a first transmission mechanism connected between the left drive wheel and the first connection end of the steering motor, and a second transmission mechanism connected between the right drive wheel and the second connection end of the steering motor.

18. The mowing robot according to claim 17, wherein
the first transmission mechanism comprises a first linkage rod and a second linkage rod,
wherein one end of the first linkage rod is connected to the drive motor configured to drive the left drive wheel, an opposite end of the first linkage rod is connected to one end of the second linkage rod, and an opposite end of the second linkage rod is connected to the first connection end of the steering motor; and/or
the second transmission mechanism comprises a third linkage rod and a fourth linkage rod, wherein a first end of the third linkage rod is connected to the drive motor configured to drive the right drive wheel, a second end of the third linkage rod is connected to a first end of the fourth linkage rod, and a second end of the fourth linkage rod is connected to the second connection end of the steering motor.

19. The mowing robot according to claim 13, wherein
the steering motor comprises a left steering motor and a right steering motor;
wherein the left steering motor is coupled to the left drive wheel, and the right steering motor is coupled to the right drive wheel; and
wherein the left steering motor is configured to rotate the left drive wheel relative to a symmetry axis of the lawn-mowing robot, and the right steering motor is configured to rotate the right drive wheel relative to the symmetry axis of the mowing robot.
